# EUROPÄISCHE PATENTSCHRIFT

(11) **EP 3 874 734 B1**
(45) Veröffentlichungstag und Bekanntmachung des Hinweises auf die Patenterteilung: **20.11.2024**
(21) Anmeldenummer: 19778499.4
(22) Anmeldetag: 25.09.2019
(51) Int. Cl.: H04N 23/51, H04N 23/57, B60R 11/04, B60R 11/00

(54) **KAMERASYSTEM UND ASSISTENZSYSTEM FÜR EIN FAHRZEUG SOWIE VERFAHREN ZUM BETREIBEN EINES KAMERASYSTEMS**
CAMERA SYSTEM AND ASSISTANCE SYSTEM FOR A VEHICLE, AND METHOD FOR OPERATING A CAMERA SYSTEM
SYSTÈME DE CAMÉRA ET SYSTÈME D'ASSISTANCE POUR UN VÉHICULE AINSI QUE PROCÉDÉ POUR FAIRE FONCTIONNER UN SYSTÈME DE CAMÉRA

(30) Priorität: 31.10.2018 DE 102018218735
(43) Veröffentlichungstag der Anmeldung: 08.09.2021
(73) Patentinhaber: Continental Automotive Technologies GmbH, 30175 Hannover (DE)
(72) Erfinder: SMITS, Thomas, 81739 München (DE)
(74) Vertreter: Continental Corporation
(86) Internationale Anmeldenummer: PCT/EP2019/075928
(87) Internationale Veröffentlichungsnummer: WO 2020/088855

(56) Entgegenhaltungen:
- EP-A2- 1 777 106
- US-A1- 2006 098 094
- US-A1- 2015 277 503

## Beschreibung

Es wird ein Kamerasystem für ein Fahrzeug angegeben, insbesondere ein Kamerasystem für ein Assistenzsystem des Fahrzeugs. Weiterhin wird ein Assistenzsystem für ein Fahrzeug angegeben, das ein Kamerasystem aufweist. Zudem wird ein Verfahren zum Betreiben eines Kamerasystems für ein Fahrzeug angegeben.

Fahrzeuge können eine Kamera aufweisen und einen Monitor, der Bilder der Kamera für einen Nutzer des Fahrzeugs darstellt. Beispielsweise sind Spiegelersatzsysteme bekannt, bei denen mittels der Kamera und des Monitors die Sichtbereiche von herkömmlichen Außenspiegeln abgebildet werden. Es sind auch Rückfahrkameras bekannt, mittels derer Bereiche abbildbar sind, die mit herkömmlichen Spiegeln nicht einsehbar sind.

EP 1 777 106 A2 betrifft ein Kamerasystem für ein Kraftfahrzeug mit einer lösbar mit dem Kraftfahrzeug verbindbaren Kameraeinheit.

US 2015/277503 A1 betrifft Module und Verbindungen für Module, die mit einem Computergerät verbunden werden sollen.

US 2006/098094 A1 betrifft ein tragbares drahtloses Rückfahrkamerasystem für Fahrzeuge.

Es ist wünschenswert, ein Kamerasystem für ein Fahrzeug anzugeben, das flexibel und dabei verlässlich verwendbar ist. Es ist zudem wünschenswert, ein Assistenzsystem für ein Fahrzeug anzugeben, das flexibel und dabei verlässlich ist. Zudem ist es wünschenswert, ein Verfahren zum Betreiben eines Kamerasystems anzugeben, das einen flexiblen und verlässlichen Betrieb des Kamerasystems ermöglicht.

Die Erfindung zeichnet sich aus durch ein Kamerasystem gemäß Anspruch 1 für ein Fahrzeug sowie durch ein korrespondierendes Verfahren gemäß Anspruch 14 zum Betrieb eines solchen Kamerasystems. Weiterhin wird ein Assistenzsystem gemäß Anspruch 12 angegeben, das insbesondere ein hier beschriebenes Kamerasystem aufweist. Die beschriebenen Merkmale und Vorteile des Kamerasystems, des Assistenzsystems und des Verfahrens gelten somit auch für die jeweils anderen Ausgestaltungen.

Gemäß zumindest einer Ausführungsform weist ein Kamerasystem für ein Fahrzeug eine Haltevorrichtung auf. Die Haltevorrichtung ist an dem Fahrzeug befestigbar, insbesondere an einer Außenseite des Fahrzeugs. Die Haltevorrichtung weist eine erste Kommunikationsschnittstelle zur drahtlosen Kommunikation auf. Das Kamerasystem weist eine Kamera auf. Die Kamera weist einen Akkumulator auf. Die Kamera weist eine zweite Kommunikationsschnittstelle zur drahtlosen Kommunikation auf. Die Kamera ist an der Haltevorrichtung abnehmbar befestigbar. Die zweite Kommunikationsschnittstelle ist ausgebildet, in einem befestigten Zustand der Kamera an der Haltevorrichtung mittels drahtloser Nahfeldkommunikation von der ersten Kommunikationsschnittstelle Positionsdaten zu empfangen, um eine relative Position der Haltevorrichtung zum Fahrzeug zu bestimmen.

Das Fahrzeug ist beispielsweise ein Kraftfahrzeug wie ein Pkw, ein Lkw oder ein Baustellenfahrzeug, wie ein Bagger. Das Fahrzeug ist beispielsweise ein Anhänger für ein Kraftfahrzeug.

Die Haltevorrichtung ist an dem Fahrzeug befestigbar, beispielsweise mittels Schrauben oder anderen Befestigungsmitteln. Die Haltevorrichtung ist insbesondere so befestigbar, dass sie zerstörungsfrei nicht ohne weiteres wieder von dem Fahrzeug entfernt werden kann.

Die Haltevorrichtung ist ausgebildet, die Kamera aufzunehmen und zu halten. Somit ist die Kamera mittels der Haltevorrichtung an dem Fahrzeug befestigbar. Beispielsweise ist die Kamera mittels Magneten an der Haltevorrichtung befestigbar. Die Kamera ist zerstörungsfrei aus der Haltevorrichtung wieder entnehmbar. Somit ist es beispielsweise möglich, die Kamera an einer Mehrzahl von Fahrzeugen zu verwenden, die jeweils eine eigene Haltevorrichtung aufweisen. Zudem ist es beispielsweise möglich, die Kamera zeitlich nur während des Betriebs des Fahrzeugs in die Haltevorrichtung einzusetzen und ansonsten aus der Haltevorrichtung zu entnehmen, beispielsweise wenn das Fahrzeug geparkt wird.

Mittels der zwei Kommunikationsschnittstellen ist es möglich, Positionsdaten von der Haltevorrichtung zu der Kamera zu übertragen. Die Positionsdaten werden insbesondere mittels einer Funktechnik übertragen. Positionsdaten werden mittels einer Nahfeldkommunikation übertragen, sodass die Positionsdaten beispielsweise nur dann übertragen werden, wenn die Kamera in dem befestigten Zustand ist. Beispielsweise werden die Positionsdaten mittels RFID, NFC, Bluetooth oder anderen Funknahfeldkommunikationsstandards übertragen. Von der Haltevorrichtung sind Daten beispielswese mittels eines Bussystems zu weiteren Steuervorrichtungen übertragbar, beispielsweise mittels CAN.

Die Positionsdaten sind beispielsweise in einem Speicher der Haltevorrichtung gespeichert. Die Positionsdaten werden beispielsweise bei der erstmaligen Montage der Haltevorrichtung an dem Fahrzeug ermittelt und im Speicher hinterlegt. Alternativ oder zusätzlich werden die Positionsdaten extern in einer Datenbank gespeichert und beispielsweise über einen Dienstanbieter abgerufen. In der Haltevorrichtung wird als Positionsdatum beispielsweise eine repräsentative Kennung gespeichert. Die Kamera ist ausgebildet, diese repräsentative Kennung zu empfangen und in Abhängigkeit von der repräsentativen Kennung die relative Positionierung der Halterung zu dem Fahrzeug aus der externen Datenbank abzurufen. Gemäß Ausführungsformen sind Informationen über die relative Positionierung auf der Kamera gespeichert, beispielsweise in einer Datenbank.

Beispielsweise sind in der Datenbank Informationen zu mehreren Fahrzeugen gespeichert. In Abhängigkeit von der repräsentativen Kennung kann aus der Datenbank die Position abgerufen werden, die dem Fahrzeug entspricht, an dem die Kamera eingesetzt wird.

Die Kamera ist ausgebildet, ihr Videosignal zusammen mit den Positionsdaten zur Weiterverarbeitung an ein Assistenzsystem des Fahrzeugs zu senden, insbesondere mittels einer Funkverbindung. Eine Darstellung des Videosignals der Kamera ist somit in Abhängigkeit der genauen Position der Kamera relativ zum Fahrzeug möglich. Dadurch ist es beispielsweise möglich, softwarebasierte Bildbearbeitung zu vereinfachen und robuster auszugestalten. Dadurch ist beispielsweise eine ressourcenschonende Bildbearbeitung möglich. Zudem ist es einfach und zuverlässig möglich, das Bild der Kamera mit Bildern weiterer Kameras zu kombinieren und beispielsweise gemeinsam anzuzeigen. Die weiteren Kameras sind beispielsweise fest installierte Kameras des Fahrzeugs. Das Zusammenfügen der Bilder der unterschiedlichen Kameras ist in Abhängigkeit der genauen Kenntnis der Position der Kameras einfach und zuverlässig möglich. Der Austausch der Positionsdaten mittels der drahtlosen Nahfeldkommunikation ermöglicht so ein Einbinden der mobilen Kamera in das Assistenzsystem des Fahrzeugs.

Gemäß einer Ausführungsform ist die Kamera mittels eines schaltbaren Magnets an der Haltevorrichtung befestigbar. Der schaltbare Magnet weist insbesondere einen Elektromagneten auf und ist im stromlosen Zustand magnetisch. Nach Anlegen einer elektrischen Spannung wird beispielsweise das Magnetfeld eines Permanentmagneten des schaltbaren Magneten zumindest teilweise aufgehoben und dadurch die Magnetkraft des schaltbaren Magneten reduziert beziehungsweise aufgehoben. Somit ist eine verlässliche Befestigung der Kamera an der Haltevorrichtung möglich. Somit ist beispielsweise ein Diebstahlschutz realisierbar. Gemäß weiteren Ausführungsformen weist der schaltbare Magnet einen Elektromagnet auf, der im bestromten Zustand magnetisch ist.

Gemäß einer Ausführungsform weist die Haltevorrichtung einen Speicher auf, auf dem eine Information speicherbar ist, die repräsentativ ist für die Position der Haltevorrichtung. Beispielsweise ist die Position bei der Montage der Haltevorrichtung vermessen worden und in Bezug auf das Fahrzeugkoordinatensystem in dem Speicher abgelegt worden. Alternativ oder zusätzlich ist beispielsweise die Art des Fahrzeugs, beispielsweise der Typ des Anhängers, bekannt. Je Typ des Fahrzeugs ist eine Position für die Montage der Haltevorrichtung vorgegeben. Somit ist in Abhängigkeit des Typs des Fahrzeugs die Position der Haltevorrichtung relativ zum Fahrzeugkoordinatensystem bekannt.

Alternativ oder zusätzlich sind die Position und/oder die Art des Fahrzeugs dezentral in einer Datenbank gespeichert und wird mittels der repräsentativen Kennung abgefragt.

Gemäß einer Ausführungsform weist die Haltevorrichtung eine Energiesendevorrichtung auf. Die Energiesendevorrichtung ist mit einem Stromnetz des Fahrzeugs elektrisch koppelbar. Beispielsweise weist die Energiesendevorrichtung eine Spule auf. Die Kamera weist gemäß einer Ausführungsform eine Energieempfangsvorrichtung auf. Die Energieempfangsvorrichtung ist mit dem Akkumulator elektrisch verbunden. Die Energieempfangsvorrichtung weist beispielsweise eine Spule auf. Elektrische Energie ist von der Energiesendevorrichtung zu der Energieempfangsvorrichtung drahtlos übertragbar zum induktiven Laden des Akkumulators. Somit ist es gemäß Ausführungsbeispiel möglich, die Kamera während des Betriebs im befestigten Zustand in der Haltevorrichtung mit elektrischer Energie zu versorgen. Hierfür muss keine Verkabelung zwischen der Haltevorrichtung und der Kamera vorgesehen werden. Die Kamera und die Haltevorrichtung sind ausgebildet, sowohl Informationen als auch Energie drahtlos miteinander auszutauschen.

Gemäß Ausführungsformen weist die Haltevorrichtung eine Seitenwand auf, die im befestigten Zustand die Kamera lateral umgibt. Die Seitenwand weist eine Höhe auf. Die Höhe ist so hoch, dass eine Oberseite der Seitenwand im befestigten Zustand bündig mit einer Oberseite der Kamera abschließt. Somit ist die Kamera seitlich lateral im befestigten Zustand vollständig von der Haltevorrichtung umgeben. Dies trägt zu einem verbesserten Diebstahlschutz bei. Insbesondere weist die Kamera einen runden Außenumfang auf. Die Seitenwand der Haltevorrichtung umgibt die Kamera konzentrisch. Aufgrund des bündigen Abschlusses der beiden Oberseiten miteinander ergeben sich so keine ausreichenden Angriffsflächen, um die Kamera zerstörungsfrei aus der Haltevorrichtung zu entfernen. Beispielsweise ist die Kamera mittels des schaltbaren Magneten in der Haltevorrichtung gehalten. Aufgrund der Höhe der Seitenwand sind nicht zerstörungsfrei ausreichend hohe Kräfte auf die Kamera auswirkbar, um die Kamera unerwünscht aus der Haltevorrichtung zu entfernen. Ein berechtigter Nutzer des Fahrzeugs kann beispielsweise den schaltbaren Magneten schalten, um die Haltekräfte des Magneten zu reduzieren und somit die Kamera aus der Haltevorrichtung entnehmen zu können. Um ein Herausfallen der Kamera aus der Haltevorrichtung zu vermeiden, wird die Kamera beispielsweise so lange in der Haltevorrichtung gehalten, bis der Nutzer die Kamera tatsächlich berührt.

Beispielsweise weist die Haltevorrichtung einen Federmechanismus auf, um eine Druckkraft auf die Kamera auszuwirken. Dies erleichtert die beabsichtigte Entnahme der Kamera aus der Haltevorrichtung. Zudem dämpft der Federmechanismus beispielsweise die Magnetkräfte beim Einsetzen der Kamera in die Haltevorrichtung, sodass ein sanfteres Einsetzen ermöglicht ist.

Gemäß einer Ausführungsform weist die Haltevorrichtung einen Signalverstärker auf. Der Signalverstärker ist ausgebildet zur Vergrößerung der Reichweite eines Funkvideosignals der Kamera. Die Kamera ist beispielsweise ausgebildet, mittels eines WLAN-Standards oder einer anderen Funkverbindung ihr Videosignal zu einem Empfangsgerät des Fahrzeugs zu übertragen. Mittels des Signalverstärkers der Haltevorrichtung ist das Funkvideosignal der Kamera verstärkbar und somit die Reichweite verbesserbar. Insbesondere wenn die Haltevorrichtung an einer Rückseite eines metallischen Anhängers montiert ist, ist so trotzdem eine ausreichend stabile Übertragung des Funkvideosignals möglich.

Gemäß einer Ausführungsform weist ein Assistenzsystem für ein Fahrzeug ein Kamerasystem gemäß zumindest einer Ausführungsform auf. Das Assistenzsystem weist mindestens eine weitere Kamera auf. Das Assistenzsystem weist einen Monitor auf. Bilder der Kamera und der weiteren Kamera sind kombiniert auf dem Monitor darstellbar. Aufgrund der Übermittlung der Positionsdaten von der Haltevorrichtung zu der Kamera ist die Position der Kamera relativ zum Fahrzeug bekannt. Dies vereinfacht eine verlässliche Darstellung des Bilds der Kamera kombiniert mit dem Bild der weiteren Kamera. Die Position der Kamera des Kamerasystems und die Position der weiteren Kamera relativ zueinander sind bekannt.

Gemäß einer Ausführungsform ist das Assistenzsystem Teil eines Spiegelersatzsystems für das Fahrzeug. Das Spiegelersatzsystem dient zum Ersatz herkömmlicher Seitenspiegel des Kraftfahrzeugs. Alternativ oder zusätzlich ist das Assistenzsystem ein Rückfahrassistenzsystem, das ausgebildet ist, Bereiche hinter dem Fahrzeug auf dem Monitor abzubilden.

Gemäß einer Ausführungsform dient ein Verfahren zum Betreiben eines Kamerasystems gemäß mindestens einer beschriebenen Ausführungsform. Das Verfahren umfasst ein Aufnehmen eines Bildes mittels der Kamera. Das Bild wird mittels einer Funkverbindung an ein Assistenzsystem des Fahrzeugs gesandt. Die Positionsdaten werden an das Assistenzsystem gesandt. Das Bild der Kamera wird in Abhängigkeit von den Positionsdaten dargestellt. Somit ist ein verlässliches Darstellen des Bildes mit zeitreduzierter Softwarenachbearbeitung möglich.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können darin mit den gleichen Bezugszeichen versehen sein.

Es zeigen:
Figur 1 eine schematische Darstellung eines Assistenzsystems gemäß einem Ausführungsbeispiel,
Figur 2 eine schematische Darstellung eines Kamerasystems gemäß einem Ausführungsbeispiel,
Figur 3 eine schematische Darstellung eines Kamerasystems gemäß einem Ausführungsbeispiel,
Figur 4 eine schematische Darstellung eines Kamerasystems gemäß einem Ausführungsbeispiel,
Figur 5 eine schematische Darstellung des Kamerasystems gemäß Figur 4 im befestigten Zustand und
Figur 6 ein schematisches Blockbild eines Kamerasystems gemäß einem Ausführungsbeispiel.

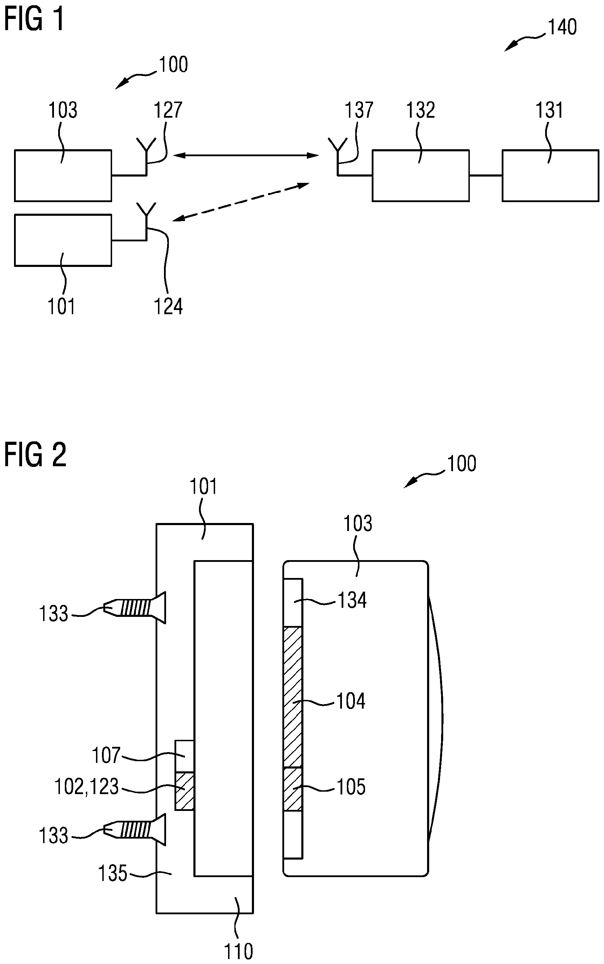

Figur 1 zeigt eine schematische Darstellung eines Assistenzsystems 140 für ein Fahrzeug. Das Assistenzsystem 140 ist beispielsweise Teil eines Spiegelersatzsystems und/oder Teil eines Rückfahrassistenzsystems für einen Nutzer des Fahrzeugs.

Das Assistenzsystem 140 weist ein Kamerasystem 100 auf. Das Kamerasystem 100 weist eine Kamera 103 auf. Das Kamerasystem 100 weist eine Haltevorrichtung 101 auf. Die Haltevorrichtung 101 ist an dem Fahrzeug befestigt. Die Kamera 103 ist reversibel an der Haltevorrichtung 101 befestigbar. Beispielsweise weist das Kamerasystem einen unbefestigten Zustand auf, in dem die Kamera 103 nicht an der Haltevorrichtung 101 angeordnet ist. In einem befestigten Zustand ist die Kamera 103 von der Haltevorrichtung 101 gehalten und insbesondere nicht oder nur unwesentlich relativ zu der Haltevorrichtung 101 bewegbar.

Das Assistenzsystem 140 weist eine Empfangsvorrichtung 132 und einen Monitor 131 auf. Weitere Elemente wie Steuervorrichtungen und Bildverarbeitungsvorrichtungen können vorgesehen sein. Der Monitor 131 ist insbesondere im Innenraum des Fahrzeugs und beispielsweise im Blickfeld eines Nutzers des Fahrzeugs angeordnet. Der Monitor 131 dient zum Darstellen von Bildern beziehungsweise Videos der Kamera 103.

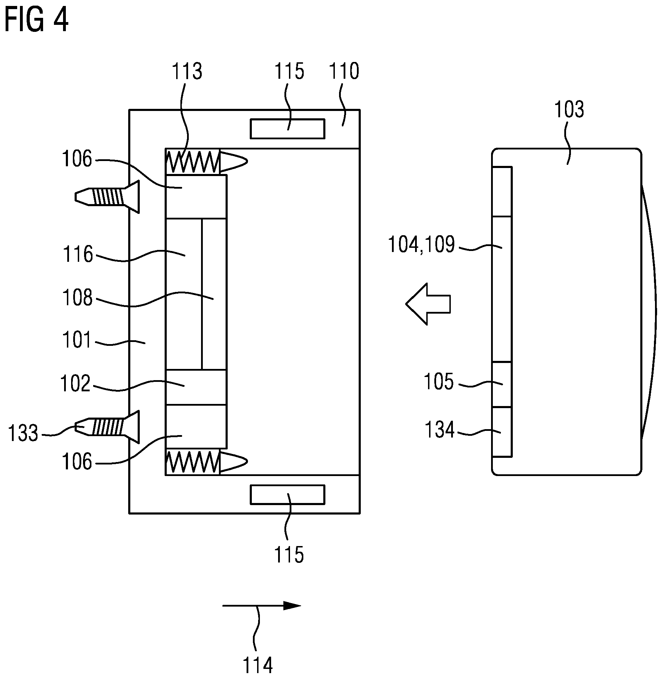

Die Bildsignale der Kamera 103 werden im Betrieb drahtlos mittels einer Funktechnik zwischen dem Kamerasystem 100 und der Empfangseinheit 132 übertragen. Die Kamera 103 weist hierzu eine Antenne 127 auf. Die Empfangsvorrichtung 132 weist korrespondierend eine Antenne 137 auf. Optional weist auch die Haltevorrichtung 101 eine Antenne 124 auf. Die Antenne 124 ist beispielsweise Teil eines Signalverstärkers 115 (Figur 4), der gemäß Ausführungsbeispielen in der Haltevorrichtung 101 vorgesehen ist.

Die Kamera 103 ist eine Funkkamera zur Sichtfelderweiterung im Fahrzeug. Die Kamera 103 ist mobil und flexibel verwendbar und beispielsweise mit einer Mehrzahl von unterschiedlichen Haltevorrichtungen 101 an unterschiedlichen Fahrzeugen koppelbar. Die Kamera 103 selbst muss dazu nicht mit dem Fahrzeug direkt verbunden werden und beispielsweise nicht mit dem Fahrzeug verschraubt werden. Die Kamera 103 wird reversibel mittels der Haltevorrichtung 101 an dem Fahrzeug befestigt. Somit ist ein temporäres Anbringen der Kamera 103 an dem Fahrzeug mittels der Haltevorrichtung 101 ermöglicht. Somit ist es möglich, die Kamera 103 auch dann zu verwenden, wenn feste Installationen unerwünscht sind. Beispielsweise wenn das Fahrzeug ein Lkw mit Lkw-Auflieger ist, werden die Auflieger häufig getauscht und beispielsweise fremde Auflieger oder Mietanhänger verwendet. Anstatt hier ein eigenes System stets neu fest zu installieren, ist die Kamera 103 nutzerfreundlich einsetzbar, die schnell an verschiedenen Fahrzeugen befestigbar und wieder entfernbar ist.

Figur 2 zeigt das Kamerasystem 100 gemäß einem Ausführungsbeispiel.

Die Haltevorrichtung 101 weist einen Gehäusekörper 135 auf. Der Gehäusekörper ist beispielsweise aus einem Kunststoff kostengünstig und effizient herstellbar. Somit ist eine Vielzahl von Haltevorrichtungen 101 ohne großen Kostenaufwand herstellbar und einsetzbar.

Die Haltevorrichtung 101 ist mittels Befestigungselementen 133 fest am Fahrzeug montierbar. Die Befestigungselemente 133 sind beispielsweise Schrauben. Die Befestigungselemente 133 sind insbesondere so angeordnet, dass sie im befestigten Zustand der Kamera 103 in der Haltevorrichtung 101 nicht zugänglich sind.

Die Haltevorrichtung 101 weist eine erste Kommunikationsschnittstelle 102 auf. Die erste Kommunikationsschnittstelle 102 weist beispielsweise einen RFID-Transponder 123 auf.

Die Kamera 103 weist einen Akkumulator 104 auf. Der Akkumulator 104 dient dazu, im Betrieb die notwendige elektrische Energie für die Kamera bereitzustellen. Der Akkumulator 104 ist beispielsweise mittels einer zusätzlichen, nicht dargestellten externen Ladeschale induktiv ladbar, beispielsweise im Führerhaus des Fahrzeugs.

Die Kamera 103 weist einen Permanentmagneten 134 auf. Mittels des Permanentmagneten 134 ist die Kamera 103 beispielsweise magnetisch in der Haltevorrichtung 101 befestigbar. Die Haltevorrichtung weist dazu gemäß Ausführungsbeispielen einen nicht explizit dargestellten korrespondierenden Magneten auf. Somit ist die Kamera 103 einfach und zuverlässig an der Haltevorrichtung 101 reversibel befestigbar.

Die Kamera 103 weist eine zweite Kommunikationsschnittstelle 105 auf. Die zweite Kommunikationsschnittstelle 105 weist beispielsweise ein RFID-Lesegerät auf.

Mittels der zweiten Kommunikationsschnittstelle 105 ist es möglich, dass die Kamera 103 Positionsdaten aus dem RFID-Transponder 123 ausliest. Die Positionsdaten sind beispielsweise in einem Speicher 107 der Haltevorrichtung 101 gespeichert. Der Speicher 107 ist insbesondere ein Halbleiterspeicher. Zwischen der ersten Kommunikationsschnittstelle 102 und der zweiten Kommunikationsschnittstelle 105 ist eine drahtlose Funkübertragung möglich. Diese Funkverbindung zum Austausch von in der Haltevorrichtung 101 hinterlegten Informationen ist auch mittels anderer Standards möglich, beispielsweise mittels Bluetooth, NFC oder anderer Nahfeldkommunikationsstandards.

In dem RFID-Transponder 123 sind beispielsweise Positionsdaten gespeichert, die Informationen darüber enthalten, wo die Haltevorrichtung 101 relativ zu dem Fahrzeug an dem Fahrzeug montiert ist. Diese Positionsdaten sind beispielsweise bekannt, weil die Halterung 101 an einer definierten Stelle an dem Fahrzeug dauerhaft angebracht ist. Alternativ oder zusätzlich wird die Halterung 101 an beliebiger Stelle montiert und bei erstmaliger Verwendung wird eine Kalibrierung durchgeführt.

Wenn die Kamera 103 mit der Halterung 101 und insbesondere dem RFID-Transponder 123 gekoppelt ist, werden die gespeicherten Positionsdaten auf die Kamera 103 übertragen und dort beispielsweise in einem nichtflüchtigen Speicher gespeichert. Somit kann die Kamera zusammen mit ihrem Videosignal per Funk auch ihre Position relativ zum Fahrzeug an die Empfangsvorrichtung 132 übermitteln.

Die Kamera 103 ist leicht in die Haltevorrichtung 101 per Magnet platzierbar und befestigbar und ebenso einfach wieder entnehmbar. Mittels des RFID-Transponders 123 ist für die Kamera 103 jeweilige Haltevorrichtung 101 und damit das jeweilige Fahrzeug erkennbar und unterscheidbar. Somit stehen der Kamera 103 beispielsweise die Daten des jeweiligen Fahrzeugs und insbesondere die exakte Position der Kamera 103 in Bezug auf das Fahrzeug zur Verfügung.

Die Positionsdaten werden in dem Assistenzsystem 140 beispielsweise verwendet, um in Kombination mit weiteren Elementen wie einem Spiegelersatzsystem ein vereinfachtes und robustes Zusammenfügen von Bildern unterschiedlicher Kameras zu ermöglichen, beispielsweise mittels Stitching. Die Funktionalität der Einbindung der Kamera 103 in das Assistenzsystem 140 mit weiteren Kameras ist einfacher, schneller und präziser durchführbar, da die exakte Position der Kamera 103 relativ zu dem Fahrzeug und damit zu den weiteren Kameras bekannt ist. Dadurch ist die Bildverarbeitung zielgerichteter und damit effizienter durchführbar.

Beispielsweise ist bei einer Mehrzahl von Anhängern jeweils eine oder mehrere Haltevorrichtungen 101 an einer Rückseite montiert. Je nachdem, welcher Anhänger eingesetzt wird, wird die Kamera 103 mit der entsprechenden Haltevorrichtung 101 verbunden.

Beispielsweise kann auch ein Privatanwender, der mehrere Anhänger hat, beispielsweise einen Pferdeanhänger, einen Anhänger für ein Boot und/oder einen normalen Nutzanhänger, die Anhänger jeweils mit einer Haltevorrichtung 101 ausstatten und dann die Kamera 103 mit dem jeweiligen gewünschten Anhänger verbinden. Auch bei landwirtschaftlichen Anwendungen ist die Anbindung der Haltevorrichtung 101 an unterschiedliche Anbaugeräte, Nutzanhänger oder ähnlichem für einen Traktor möglich und es muss stets beispielsweise nur eine einzige Kamera 103 mit dem jeweils gewünschten Fahrzeug verbunden werden.

Bei einem Baustellenfahrzeug, wie beispielsweise einem Bagger oder einem Radlader, ist es beispielsweise möglich, die Haltevorrichtung 101 an einem Baggerarm anzubringen. Mittels der ersten Kommunikationsschnittstelle 102 und der zweiten Kommunikationsschnittstelle 105 sind dann beispielsweise Daten über die Baggerarmstellung oder ähnliches austauschbar. Somit ist die Kamera 103 beziehungsweise das Bild der Kamera 103 einfach und zuverlässig in das Koordinatensystem des Baggers einbindbar, um eine adaptive Steuerung des Sichtfelds und/oder der automatischen Kombination mehrerer Videosignale zu realisieren.

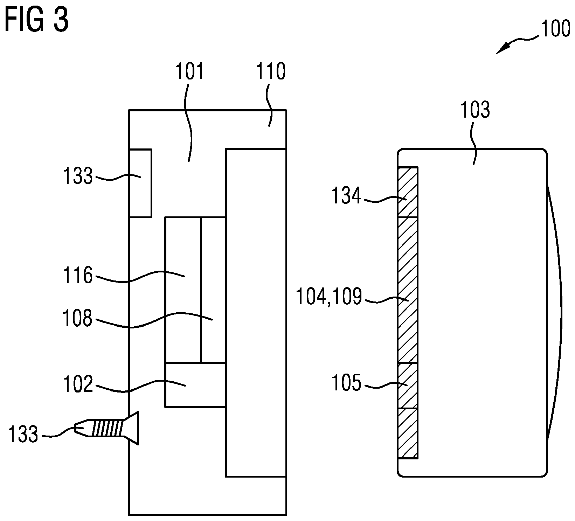

Figur 3 zeigt das Kamerasystem 100 gemäß einem weiteren Ausführungsbeispiel. Das Ausführungsbeispiel der Figur 3 basiert auf dem Ausführungsbeispiel der Figur 2. Im Folgenden wird daher vorrangig auf Unterschiede und zusätzliche Merkmale eingegangen.

Die Haltevorrichtung 101 gemäß dem Ausführungsbeispiel der Figur 3 weist eine Energiesendevorrichtung 108 auf. Diese ist mit einem Steuerungsmodul 116 verbunden. Die Energiesendevorrichtung 108 ist ausgebildet zum induktiven Laden der Kamera 103. Die Energiesendevorrichtung 108 weist beispielsweise eine oder mehrere Spulen auf.

Die Haltevorrichtung 101 ist mit einem Stromnetz des Fahrzeugs elektrisch verbindbar. Energie aus dem Stromnetz des Fahrzeugs ist mittels der Energiesendevorrichtung 108 kontaktlos auf die Kamera 103 übertragbar. Das Steuerungsmodul 116 dient beispielsweise zum Steuern und Regeln der Ladung des Akkumulators 104 der Kamera 103.

Die Kamera 103 weist eine Energieempfangsvorrichtung 109 auf. Die Energieempfangsvorrichtung 109 weist beispielsweise eine oder mehrere Spulen auf. Die Energieempfangsvorrichtung 109 ist ausgebildet, um induktiv Energie zu empfangen. Die Energieempfangsvorrichtung 109 ist mit dem Akkumulator 104 elektrisch verbunden.

Im Vergleich zu der Haltevorrichtung 101 gemäß dem Ausführungsbeispiel der Figur 2 weist die Haltevorrichtung 101 gemäß dem Ausführungsbeispiel der Figur 3 somit die Möglichkeit auf, die Kamera 103 induktiv zu laden. Somit ist es möglich, die Kamera 103 auch für einen längeren Zeitraum in der Haltevorrichtung 101 zu betreiben, insbesondere länger als die in dem Akkumulator 104 gespeicherte Energie ausreichen würde.

Das Steuerungsmodul 116 realisiert die Spannungsversorgung mit beispielsweise 12 V oder 24 V und die Ladeschaltung und Ladeerhaltungsschaltung. Über die Ladespule der Energiesendevorrichtung 108 ist es möglich, die Kamera 103 drahtlos zu laden. Zum Laden der Kamera 103 ist keine Steckverbindung mit der Haltevorrichtung 101 notwendig. Somit ist es weiterhin möglich, die Kamera ausreichend wasserdicht und vollständig verkapselt auszubilden. Beispielsweise erfüllt die Kamera 103 die IP69 beziehungsweise IP69K-Norm und ist entsprechend gegen Wasser auch bei Hochdruckreinigung und Dampfreinigung geschützt sowohl im Einsatz bei Landwirtschaftsfahrzeugen als auch bei Straßenfahrzeugen.

Die Kamera 103 ist beispielsweise in der externen Ladeschale im Innenraum des Fahrzeugs aufladbar, die beispielsweise mit einer 12 V-Steckdose oder 24 V-Steckdose verbunden ist, beispielsweise mit einem Zigarettenanzünder. Zusätzlich ist die Kamera 103 in der Haltevorrichtung 101 aufladbar. Beispielsweise ist die Haltevorrichtung 101 auch als Ladeschale für den Innenraum anwendbar.

Das Steuerungsmodul 116 ist gemäß Ausführungsbeispielen mit weiteren Eingängen und Schnittstellen ausgebildet. Beispielsweise ist das Steuerungsmodul 116 mit einem Bussystem des Fahrzeugs koppelbar, beispielsweise für eine Rückfahrlichterkennung. Auch Informationen der Haltevorrichtung 101 sind mittels des Steuerungsmoduls 116 abrufbar, beispielweise um eine Beleuchtung zu steuern.

Die Haltevorrichtung 101, die mit einer externen Stromversorgung elektrisch verbunden ist, ist gemäß Ausführungsbeispielen dazu ausgebildet, mittels der ersten Kommunikationsschnittstelle 102 mittels Bluetooth, IEEE 802.11, UWB (Ultrabreitbandtechnologie; englisch: ultra-wideband) und/oder Wireless USB oder anderen Funkstandards mit der zweiten Kommunikationsschnittstelle 105 der Kamera 103 zu kommunizieren. Dies erfolgt beispielsweise alternativ oder zusätzlich zu der RFID- oder NFC-Kommunikation.

Figur 4 zeigt das Kamerasystem 100 gemäß einem weiteren Ausführungsbeispiel. Das Kamerasystem 100 gemäß dem Ausführungsbeispiel der Figur 4 basiert im Wesentlichen auf dem Ausführungsbeispiel der Figur 3. Im Folgenden wird daher vorrangig auf Unterschiede und zusätzliche Merkmale eingegangen.

Die Haltevorrichtung 101 weist einen schaltbaren Magnet 106 auf. Der schaltbare Magnet dient zur Kopplung mit dem Permanentmagnet 134 der Kamera 103 zum Befestigen der Kamera 103 in der Haltevorrichtung 101. Der schaltbare Magnet weist beispielsweise einen Permanentmagneten und einen Elektromagneten auf. Insbesondere ist der schaltbare Magnet 106 somit stromlos magnetisch. Dadurch wird ein sicheres Befestigen der Kamera 103 in der Haltevorrichtung 101 auch gewährleistet, wenn keine Spannung vorhanden ist, beispielsweise bei geparktem Fahrzeug. Beim Anlegen einer Spannung an den schaltbaren Magneten 106 wird die Magnetkraft des Permanentmagneten soweit reduziert, dass die resultierende magnetische Kraft leicht überwunden werden kann. Derartige schaltbare Magnete 106 sind beispielsweise von der Firma Intertec erhältlich. Beispielsweise ist ein einzelner schaltbarer Magnet 106 ausgebildet, eine Haftkraft von etwa 40 Newton auszuwirken. Beispielsweise werden vier derartiger Magneten 106 verwendet. Ohne die Einrechnung von Verlusten ist so eine Haftkraft zusammen mit dem Permanentmagneten 134 von 34 Kilogramm realisierbar. Mit einem Strom von etwa 500 mA pro Magnet 106 können die Magneten kurzzeitig geschaltet werden, und die Kamera 103 kann aus der Haltevorrichtung 101 entnommen werden. Die Anteile der Magneten 106 sind insbesondere abhängig von einer gewünschten Haftkraft.

Die Haltevorrichtung 101 weist einen Federmechanismus 113 auf. Der Federmechanismus 113 ist ausgebildet, eine Druckkraft 114 auszuwirken. Die Druckkraft 114 ist insbesondere der Magnetkraft der Magneten 106 entgegengerichtet. Der Federmechanismus 113 vereinfacht somit das Entnehmen der Kamera aus der Haltevorrichtung 101, wenn die Magneten 106 geschaltet sind. Die Kamera 103 wird durch den Federmechanismus 113 dann schon leicht aus der Haltevorrichtung 101 herausgedrückt. Dadurch wird eine Angriffsfläche an der Kamera 103 freigelegt.

Beim Einsetzen der Kamera 103 in die Haltevorrichtung 101 vermeidet der Federmechanismus 113 ein zu starkes Anstoßen der Kamera 103 an die Haltevorrichtung 101. Bewegung der Kamera 103 in Richtung der Magnete 106 wird gedämpft.

Alternativ ist es auch möglich, die Richtung des resultierenden Magnetfelds der schaltbaren Magnete 106 umzukehren, um die Kamera 103 aus der Haltevorrichtung 101 zu lösen. Auch eine Dämpfung beim Einsetzen wäre so realisierbar, beispielsweise mittels eines Annäherungssensors. Beispielsweise mittels eines kapazitiven Resonanzkreises wird das Annähern der Kamera 103 in die Halterung erkannt und entsprechend die Magnete 106 geschaltet, um die Bewegung der Kamera 103 zu dämpfen.

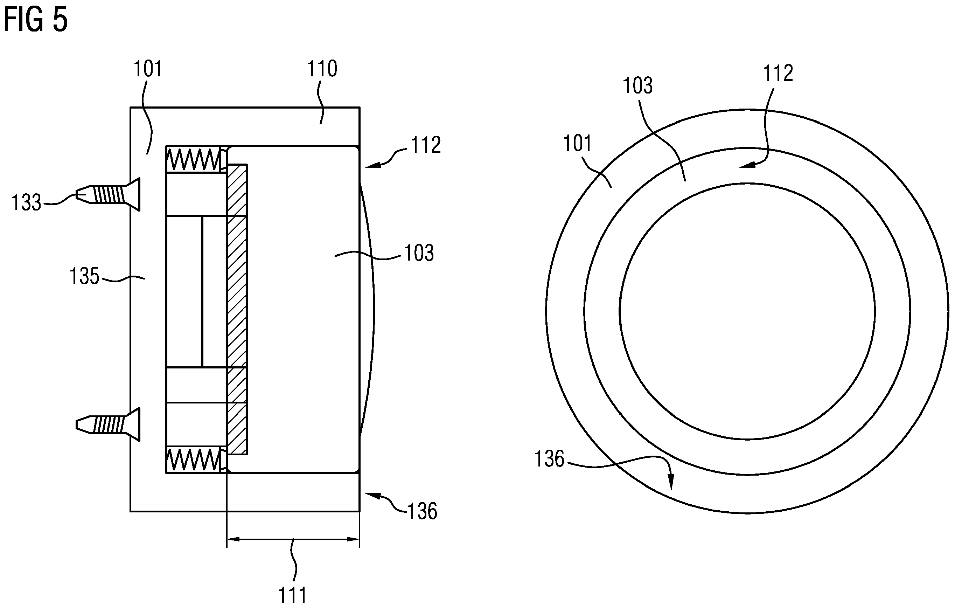

Der Gehäusekörper 135 der Haltevorrichtung 101 weist eine Seitenwand 110 auf. Die Seitenwand 110 umgibt die Kamera 103 im befestigten Zustand lateral, wie insbesondere auch aus Figur 5 ersichtlich wird. Die Seitenwand 110 weist eine Höhe 111 auf. Die Höhe 111 ist so gewählt, dass eine im Betrieb dem Fahrzeug abgewandte Oberseite 136 der Seitenwand 110 bündig mit einer Oberseite 112 der Kamera 103 abschließt. Dadurch und aufgrund der insbesondere runden Ausgestaltung der Außenkontur der Kamera 103 bieten sich im befestigten Zustand der Kamera 103 keine ausreichenden Angriffsflächen, um die Kamera 103 von einem Nutzer ungewünscht aus der Haltevorrichtung 101 zu entnehmen. Somit wird der Diebstahlschutz erhöht. Die Kamera 103 kann somit auch in Pausen in der Haltevorrichtung 101 verbleiben. Die Haltekraft der schaltbaren Magneten 106 in Kombination mit der ausreichend hohen Seitenwand 110 der runden Außenform realisieren, dass die Kamera 103 nicht ohne ein Schalten der Magnete 106 zerstörungsfrei aus der Haltevorrichtung 101 entnommen werden kann. Somit ist die einfach und leicht mittels Magnetkraft befestigbare Kamera 103 gegen Diebstahl geschützt. Die Kamera 103 kann somit beispielsweise bereits vor Fahrtantritt in die Haltevorrichtung 101 gesteckt werden. Bei einem kurzen Stopp aber auch über mehrere Tage oder dauerhaft ist die Kamera 103 verlässlich in der Halterung 101 gehalten ohne ein zu hohes Risiko, dass die Kamera 103 einfach entnommen werden kann.

Die Seitenwand 110 ist in Form eines Hohlzylinders ausgebildet. Die Höhe 111 ist insbesondere höher als bei den Ausführungsbeispielen gemäß Figuren 2 und 3. Die Höhe 111 ist genauso hoch, dass die Oberseite 112 der Kamera 103 im befestigten Zustand bündig mit der Oberseite 136 der Seitenwand 110 abschließt. Somit wird ein mechanischer Angriffspunkt vermieden, um die Kamera 103 per Hand oder mit einem Werkzeug zu greifen.

Die runde Formgebung der Kamera ist für die Diebstahlsicherung zudem nutzbringend. Bei möglichst genauer Passung der Haltevorrichtung 101 und der Kamera 103 kann kein flaches Werkzeug, wie beispielsweise ein Blech, ein Schraubenzieher oder ähnliches, eingesetzt werden, um die Kamera 103 zerstörungsfrei aus der Haltevorrichtung 101 zu heben. Hierfür ist es auch möglich, die Seitenwand 110 leicht konisch verlaufen zu lassen.

Beispielsweise ist die Kamera für eine Nutzereingabe an der Empfangsvorrichtung 132 aus der Halterung freigebbar. Sichere Authentifizierung schützt so vor Missbrauch. Mittels der Kommunikationsschnittstellen 102, 105 und insbesondere mittels des RFID-Transponders 123 sind weitere Freigabemöglichkeiten implementierbar.

Die Kamera 103 ist somit auch im stromlosen Zustand sicher in der Haltevorrichtung 101 gehalten. Die Kamera 103 ist trotzdem komfortabel und schnell aus der Haltevorrichtung 101 entnehmbar. Die Kamera 103 ist dadurch flexibel benutzbar, beispielsweise als eigenständige Kamera 103 und im Wechsel mit anderen Haltevorrichtungen 101. Die Kamera 103 benötigt dabei keine Steckverbindungen. Das Gehäuse 103 kann geschlossen bleiben, um die ausreichende Dichtheit der Kamera 103 beispielsweise gegenüber Wasser zu erreichen.

Gemäß weiteren Ausführungsbeispielen weist die Kamera 103 eine andere Außenkontur auf. Beispielsweise eine längliche Form, eine Quaderform oder eine ovale Form ist ebenfalls möglich. Dies ist beispielsweise insbesondere bei Stereokameras und/oder Projektionsoptiken für strukturiertes Licht vorteilhaft, wenn ein größerer Abstand der optischen Komponenten zueinander notwendig ist. Bei der runden Form wird jedoch davon ausgegangen, dass der Diebstahlschutz am effizientesten ist.

Die Haltevorrichtung 101 weist den Signalverstärker 115 auf. Der Signalverstärker 115 nimmt elektromagnetische Wellen der Kamera 103 auf. Die elektromagnetischen Wellen der Kamera dienen beispielsweise dazu, das Videosignal der Kamera 103 zu der Empfangsvorrichtung 132 zu funken. Die aufgenommenen elektromagnetischen Strahlen werden von dem Signalverstärker 115 verstärkt und dann verstärkt zu der Empfangsvorrichtung 132 gesandt. Beispielsweise weist der Signalverstärker 115 dazu die Antenne oder mehrere Antennen 124 auf. Somit ist es möglich, die Haltevorrichtung 101 und die Kamera 103 auch bei ansonsten schwierigen Ausbreitungsbedingungen für die Funksignale der Kamera 103 anzuwenden. Beispielsweise wenn die Haltevorrichtung 101 an der Rückseite eines Sattelzugs mit einem Auflieger aus Metall eingesetzt wird, ist es so möglich, die Antenne 125 nach außen zu führen und so zu positionieren, dass eine Funkverbindung zu der Empfangsvorrichtung 132 möglich ist, die im Zugfahrzeug angeordnet ist. Hierdurch ist eine Verstärkung der Funksignale der Kamera 103 möglich und dabei kann weiterhin auf Steckverbindungen zur Kamera verzichtet werden. Die Kommunikation zwischen der Kamera 103 und der Haltevorrichtung 101 erfolgt drahtlos.

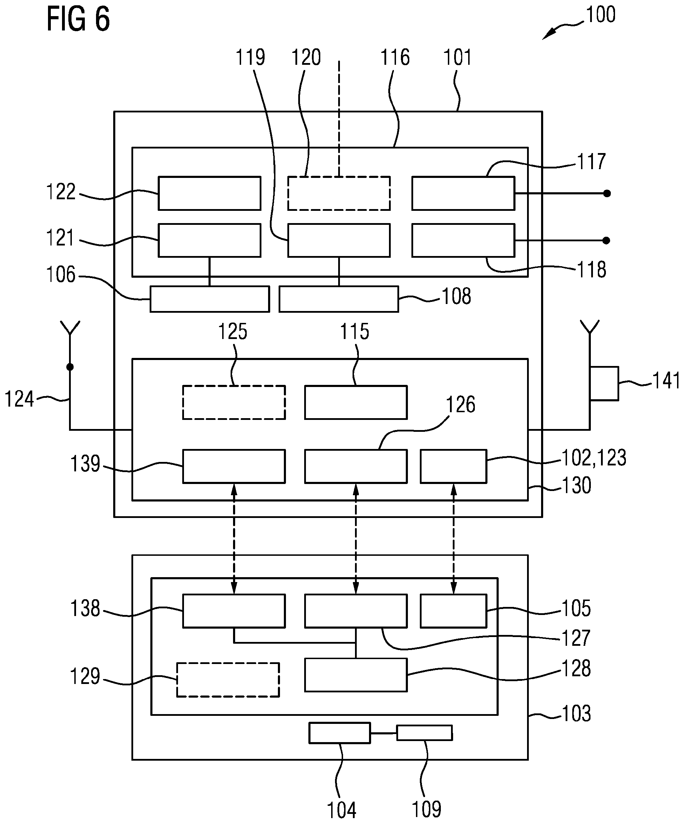

Beispielsweise wird die Funkübertragung der Antenne 127 der Kamera 103 über eine Antennenkopplung 126 (Figur 6) in die Haltevorrichtung 101 eingekoppelt. Dazu sind entsprechende Elemente in die Seitenwand 110 eingelassen. Diese sind insbesondere so positioniert, dass sie in der Nähe der Antenne 127 der Kamera 103 angeordnet sind, um eine gute Ankopplung zu gewährleisten. Die Antennenkopplung ist beispielsweise mittels mehrerer Einzelelemente oder einem Ring realisiert. Die Befestigung der Kamera 103 in der Haltevorrichtung 101 ist insbesondere auch bei vorhandenen Antennenelementen in der Seitenwand 110 ohne Arretierung, Nut und Steg realisiert.

Ein Kompensator ist gemäß Ausführungsbeispiel vorgesehen, um die Kopplungsverluste und die Leitungsverluste der Zuleitung zu der externen Antenne 124 auszugleichen. Beispielsweise wird hierzu sowohl in der Sende- als auch in der Empfangseinrichtung jeweils ein Analogverstärker verwendet. Die RX/TX-Umschaltung erfolgt dabei beispielsweise durch Detektion eines Sendevorgangs der Kamera.

Alternativ oder zusätzlich ist es möglich, das in der Haltevorrichtung 101 empfangene Signal einem in der Haltevorrichtung 101 integrierten Empfänger zuzuführen, der eine Dekodierung der Signale durchführt. Anschließend werden die empfangenen Daten verarbeitet oder über eine andere Kommunikationstechnologie oder eine andere physikalische Schicht übertragen. Beispielsweise weist die Haltevorrichtung 101 einen IEEE802.11 Empfänger auf und leitet die Signale der Videokamera dann über ein BroadR Reach-Netzwerk weiter. Alternativ oder zusätzlich ist in der Haltevorrichtung 101 eine Repeaterfunktionalität implementiert. In der Kamera 103 empfangene WLAN-Pakete werden dann auch wieder gemäß dem WLAN-Standard weiterversendet. Der Repeater kann als Single-Channel, Dual-Channel, mit 2,4/5 GHz Support und/oder mit Umsetzung von 2,4 GHz auf 5 GHz oder weiteren Funktionalitäten ausgestattet sein.

Alternativ oder zusätzlich sind mehrere WLAN-Module außerhalb der Haltevorrichtung 101 vorgesehen, die beispielsweise mittels USB miteinander verbunden sind.

Alternativ oder zusätzlich ist mittels einer zusätzlichen Kurzstreckenantenne 138 der Kamera 103 und einer korrespondierenden Kurzstreckenantenne 139 der Haltevorrichtung 101 (Figur 6) eine Datenübertragung realisiert. Die Antennen 138, 139 weisen beispielsweise ein gerichtetes Antennendiagramm auf, und die TX-Leistung wird sehr klein realisiert. Die Kurzstreckenantennen 138, 139 werden beispielsweise bei Benutzung des WLAN-Moduls über einen Antennenswitch selektiert. Die Kommunikation zwischen der Kamera 103 und der Haltevorrichtung 101 würde dann nicht mittels der Antenne 127 erfolgen.

Alternativ könnten auch weitere Drahtlostechnologien für die Datenübertragung zwischen der Kamera 103 und der Haltevorrichtung 101 zum Übertragen des Videosignals zum Einsatz kommen, beispielsweise Bluetooth, UWB, Wireless USB oder weitere.

Figur 6 zeigt ein Blockbild des Kamerasystems 100 gemäß einer Ausführungsform. In der Figur 6 ist eine Vielzahl von Elementen gezeigt. Gemäß Ausführungsbeispielen wird auf einzelne Komponenten verzichtet, und eine beliebige Kombination der einzelnen Komponenten und Weglassen einzelner Komponenten ist möglich.

Die Kamera 103 weist die Energieempfangsvorrichtung 109 und den elektrisch damit verbundenen Akkumulator 104 auf. Die Kamera 103 weist die zweite Kommunikationsschnittstelle 105 auf, um die Positionsdaten von der Haltevorrichtung 101 empfangen zu können.

Die Kamera 103 weist die Antenne 127 auf, um das Videosignal im Betrieb drahtlos übertragen zu können. Hierfür sind beispielsweise alternativ oder zusätzlich die Kurzstreckenantenne 138 und/oder ein WLAN-Modul 128 vorgesehen. Zudem ist gemäß Ausführungsbeispielen optional ein Bluetooth-Modul 129 vorgesehen, das das Videosignal zur Haltevorrichtung 101 übertragen kann. Die Kamera 103 weist somit eine Vielzahl von Drahtlosschnittstellen auf, um Informationen und Daten drahtlos empfangen und senden zu können.

Die Haltevorrichtung 101 weist ein Drahtlosmodul 130 auf. Das Drahtlosmodul 130 dient zur drahtlosen Kommunikation mit der Kamera 103 sowie mit der Empfangsvorrichtung 132. Die Haltevorrichtung 101 weist die Kurzstreckenantenne 139 auf zur Kommunikation mit der Kurzstreckenantenne 138 der Kamera 103. Gemäß Ausführungsbeispielen weist die Haltevorrichtung 101 optional ein WLAN-Modul 125 auf zum Aussenden des Videosignals gemäß dem IEEE802.11-Standard. Die Haltevorrichtung weist die Antennenkopplung 126 auf, um Wellen der Antenne 127 der Kamera 103 aufnehmen zu können. Die Haltevorrichtung 101 weist gemäß Ausführungsbeispielen den Signalverstärker 115 auf, der beispielsweise als Duplex-RF-Verstärker beziehungsweise Kompensator ausgebildet ist. Die Haltevorrichtung 101 weist die erste Kommunikationsschnittstelle 102 auf, die beispielsweise den RFID-Transponder 123 aufweist. Dadurch sind die Positionsdaten der Halterung 101 speicherbar und an die Kamera 101 übertragbar.

Die Halterung 101 weist beispielsweise einen Kompensator 122 sowie einen Treiber 121 zur Ansteuerung der schaltbaren Magnete 106 auf.

Zudem weist die Haltevorrichtung 101 gemäß Ausführungsbeispielen eine Ladeschaltung 119 auf, die Teil des Steuerungsmoduls 116 ist. Die Ladeschaltung 119 ist mit der Energiesendevorrichtung 108 beziehungsweise mit den Spulen gekoppelt, um ein induktives Laden zu realisieren.

Datenschnittstellen 117 sind vorgesehen, um zusätzliche Informationen empfangen und ausgeben zu können, beispielsweise Eingänge über Betriebszustände des Kraftfahrzeugs und Ausgänge über Betriebszustände der Kamera 103. Somit ist es beispielsweise möglich, eine Information auszutauschen, dass ein Rückwärtsgang im Fahrzeug eingelegt wurde. In Abhängigkeit von diesem Eingangssignal wird beispielsweise die Kamera 103 aktiviert. Ein Triggereingang zum Aktivieren der Kamera 103 ist beispielsweise mittels der Datenschnittstellen 117 realisiert. Ein Triggersignal zum Aktivieren der Kamera 103 kommt beispielsweise von der Zugmaschine und/oder von dem Anhänger. Eine weitere Schnittstelle 120 dient beispielsweise zur signaltechnischen Kopplung der Haltevorrichtung 101 mit einem Bussystem. Eine Schnittstelle 118 ist an der Haltevorrichtung 101 vorgesehen, um die Haltevorrichtung 101 mit einer Spannungsversorgung verbinden zu können.

Beispielsweise ist die Haltevorrichtung 101 mit einem externen WLAN-Modul 141 verbunden, um das Videosignal der Kamera 101 aussenden zu können.

Eine Kombination der verschiedenen Varianten und Ausführungsbeispiele und das Weglassen einzelner Komponenten sind möglich. Beispielsweise ist es möglich, die Variante mit induktiver Ladefunktion auch mit einem Kommunikationsteil zu versehen, um die externe Antenne 124 zu unterstützen oder das externe WLAN-Modul 141.

Mit externen Eingängen und Ausgängen ist es zudem möglich, externe Sensoren und/oder Aktoren anzusteuern. Beispielsweise ist es möglich, Ultraschallsender und Empfänger, Sender für strukturiertes Licht, Näherungssensoren oder andere Elemente des Assistenzsystems 140 anzusteuern. Somit ist es möglich, das Kamerasystem 100 auch zur Entfernungsmessung und zur 3D-Visualisierung einzusetzen. Dies wird insbesondere durch die genaue Kenntnis der Lage der Kamera 103 relativ zu den übrigen Elementen und Sensoren ermöglicht. Die Sensoren und/oder Aktoren sind beispielsweise über Leitungen mit der Haltevorrichtung 101 verbunden oder direkt mechanisch im und/oder am Gehäusekörper 135 integriert.

In der Haltevorrichtung 101 ist somit im vergleichsweise kleinen Bauraum sowohl ein drahtloses Laden, beispielsweise nach QI-Standard, eine NFC-Kommunikation und ein Antennenkoppeln möglich.

Das Kamerasystem 100 ermöglicht eine Integration der mobilen Kamera 103 in ein Multisichtfeldkamerasystem des Assistenzsystems 140. Die mobile Kamera 103 ist im Einsatz in der Haltevorrichtung 101 an der Außenseite des Fahrzeugs an eine Stromversorgung angeschlossen und der Akkumulator 104 kann geladen werden. Auch eine Montage an einer Innenseite des Fahrzeugs ist möglich, beispielsweise zu Überwachung eines Innenraums eines Anhängers. Aufgrund der Möglichkeit, die Kamera 103 an einer Vielzahl von Fahrzeugen anzuwenden, reduzieren sich die Systemkosten für den Nutzer. Die Bauteile und das Design des Kamerasystems 101 ermöglichen einen guten Diebstahlschutz. Eine gute Funkverbindung zu der Empfangsvorrichtung 132 ist auch bei Abschirmungen oder ähnlichem durch das Fahrzeug möglich.

## Patentansprüche

1. Kamerasystem für ein Fahrzeug, aufweisend:
- eine Haltevorrichtung (101), die an dem Fahrzeug befestigbar ist und die eine erste Kommunikationsschnittstelle (102) zur drahtlosen Kommunikation aufweist,
- eine Kamera (103), die einen Akkumulator (104) aufweist und die eine zweite Kommunikationsschnittstelle (105) zur drahtlosen Kommunikation aufweist, wobei die Kamera (103) an der Haltvorrichtung (101) abnehmbar befestigbar ist, und
wobei die zweite Kommunikationsschnittstelle (105) ausgebildet ist, in einem befestigten Zustand der Kamera (103) an der Haltevorrichtung (101) mittels drahtloser Nahfeldkommunikation von der ersten Kommunikationsschnittstelle (102) Positionsdaten zu empfangen, um eine relative Position der Haltevorrichtung (101) zum Fahrzeug zu bestimmen, und wobei die Kamera (103) eine Antenne (127) aufweist zur Kommunikation mittels Funk mit einer Empfangseinheit (132) eines Assistenzsystems (140) des Fahrzeugs, um ein Bild der Kamera (103) zusammen mit den Positionsdaten an das Assistenzsystem (140) zu senden.

2. Kamerasystem nach Anspruch 1, bei dem die Kamera (103) mittels eines schaltbaren Magnets (106) an der Haltevorrichtung (101) befestigbar ist.

3. Kamerasystem nach Anspruch 2, bei dem die Haltevorrichtung (101) einen stromlos magnetischen Elektromagneten aufweist.

4. Kamerasystem nach einem der Ansprüche 1 bis 3, bei dem die Haltervorrichtung (101) einen Speicher (107) aufweist, auf dem eine Information speicherbar ist, die repräsentativ ist für die Position der Haltevorrichtung (101).

5. Kamerasystem nach Anspruch 4, bei dem die Information die Position als repräsentative Kennung umfasst.

6. Kamerasystem nach Anspruch 4 oder 5, bei dem die Information die Position unmittelbar in Bezug auf ein Fahrzeugkoordinatensystem umfasst.

7. Kamerasystem nach einem der Ansprüche 1 bis 6, bei dem die erste und die zweite Kommunikationsschnittstelle (102, 105) jeweils Teil eines RFID-Kommunikationssystems sind.

8. Kamerasystem nach einem der Ansprüche 1 bis 7, bei dem die Haltevorrichtung (101) eine Energiesendevorrichtung (108) aufweist, die mit einem Stromnetz des Fahrzeugs elektrisch koppelbar ist, und bei dem die Kamera (103) eine Energieempfangsvorrichtung (109) aufweist, die mit dem Akkumulator (104) elektrisch verbunden ist, wobei elektrische Energie von der Energiesendevorrichtung (108) zu der Energieempfangsvorrichtung (109) drahtlos übertragbar ist zum induktiven Laden des Akkumulators (104).

9. Kamerasystem nach einem der Ansprüche 1 bis 8, bei dem die Haltevorrichtung (101) eine Seitenwand (110) aufweist, die im befestigten Zustand die Kamera (103) lateral umgibt, wobei die Seitenwand (110) eine Höhe (111) aufweist, sodass eine Oberseite (136) der Seitenwand (110) im befestigten Zustand bündig mit einer Oberseite (112) der Kamera abschließt.

10. Kamerasystem nach einem der Ansprüche 1 bis 9, bei dem die Haltevorrichtung (101) einen Federmechanismus (113) aufweist, um eine Druckkraft auf die Kamera (103) auszuwirken.

11. Kamerasystem nach einem der Ansprüche 1 bis 10, bei dem die Haltevorrichtung (101) einen Signalverstärker (115) zur Vergrößerung der Reichweite eines Funkvideosignals der Kamera (103) aufweist.

12. Assistenzsystem für ein Fahrzeug, aufweisend:
- ein Kamerasystem (100) nach einem der Ansprüche 1 bis 11,
- mindestens eine weitere Kamera,
- einen Monitor (131), wobei Bilder der Kamera (103) und der weiteren Kamera kombiniert auf dem Monitor (131) darstellbar sind.

13. Assistenzsystem für ein Fahrzeug nach Anspruch 12, das Teil eines Spiegelersatzsystems für das Fahrzeug ist.

14. Verfahren zum Betreiben eines Kamerasystems (100) nach einem der Ansprüche 1 bis 11, umfassend:
- Aufnehmen eines Bildes mittels der Kamera (103),
- Senden des Bildes mittels einer Funkverbindung an eine Empfangseinheit (132) eines Assistenzsystems (140) des Fahrzeugs,
- Senden der Positionsdaten zusammen mit dem Bild mittels der Kamera (103) an die Empfangseinheit (132) des Assistenzsystems (140),
- Darstellen des Bildes in Abhängigkeit von den Positionsdaten.

## Claims

1. Camera system for a vehicle, comprising:
- a holding device (101) that can be fastened to the vehicle and that comprises a first communication interface (102) for wireless communication,
- a camera (103) that comprises an accumulator (104) and that comprises a second communication interface (105) for wireless communication, wherein the camera (103) can be fastened removably to the holding device (101), and wherein
the second communication interface (105) is designed, when the camera (103) is fastened to the holding device (101), to receive position data from the first communication interface (102) by means of wireless near-field communication in order to determine a position of the holding device (101) relative to the vehicle,
and wherein the camera (103) comprises an antenna (127) for communication by means of radio with a receiving unit (132) of an assistance system (140) of the vehicle in order to transmit an image from the camera (103) together with the position data to the assistance system (140).

2. Camera system according to Claim 1, in which the camera (103) can be fastened to the holding device (101) by means of a switchable magnet (106).

3. Camera system according to Claim 2, in which the holding device (101) comprises an electromagnet that is magnetic when not energized.

4. Camera system according to one of Claims 1 to 3, in which the holding device (101) comprises a memory (107) in which information that is representative of the position of the holding device (101) can be stored.

5. Camera system according to Claim 4, in which the information includes the position as a representative identifier.

6. Camera system according to Claim 4 or 5, in which the information directly includes the position in relation to a vehicle coordinate system.

7. Camera system according to one of Claims 1 to 6, in which the first and the second communication interface (102, 105) are each part of an RFID communication system.

8. Camera system according to one of Claims 1 to 7, in which the holding device (101) comprises an energy transmission device (108) that can be electrically coupled to an electrical system of the vehicle, and in which the camera (103) comprises an energy receiving device (109) that is electrically connected to the accumulator (104), wherein electrical energy can be transmitted wirelessly from the energy transmission device (108) to the energy receiving device (109) for inductive charging of the accumulator (104).

9. Camera system according to one of Claims 1 to 8, in which the holding device (101) comprises a side panel (110) that surrounds the camera (103) laterally when in the fastened state, wherein the side panel (110) has a height (111), so that a top side (136) of the side panel (110) is flush with a top side (112) of the camera when in the fastened state.

10. Camera system according to one of Claims 1 to 9, in which the holding device (101) comprises a spring mechanism (113) in order to exercise a compressive force on the camera (103).

11. Camera system according to one of Claims 1 to 10, in which the holding device (101) comprises a signal amplifier (115) for extending the range of a radio video signal of the camera (103).

12. Assistance system for a vehicle, comprising:
- a camera system (100) according to one of Claims 1 to 11,
- at least one further camera,
- a monitor (131), wherein images from the camera (103) and the further camera can be displayed in combined form on the monitor (131).

13. Assistance system for a vehicle according to Claim 12, which is part of a mirror replacement system for the vehicle.

14. Method for operating a camera system (100) according to one of Claims 1 to 11, comprising:
- recording an image by means of the camera (103),
- transmitting the image by means of a radio connection to a receiving unit (132) of an assistance system (140) of the vehicle,
- transmitting the position data together with the image to the receiving unit (132) of the assistance system (140) by means of the camera (103),
- representing the image depending on the position data.

## Revendications

1. Système de caméra pour un véhicule, présentant :
- un dispositif de maintien (101) qui peut être fixé au véhicule et qui présente une première interface de communication (102) pour la communication sans fil,
- une caméra (103) qui présente un accumulateur (104) et qui présente une deuxième interface de communication (105) pour la communication sans fil, dans
lequel la caméra (103) peut être fixée de manière amovible au dispositif de maintien (101), et dans lequel la deuxième interface de communication (105) est réalisée pour recevoir, dans un état de la caméra (103) fixée au dispositif de maintien (101), des données de position au moyen d'une communication sans fil en champ proche de la première interface de communication (102) afin de déterminer une position relative du dispositif de maintien (101) par rapport au véhicule, et dans lequel la caméra (103) présente une antenne (127) pour la communication par radio avec une unité de réception (132) d'un système d'assistance (140) du véhicule afin d'envoyer au système d'assistance (140) une image de la caméra (103) avec les données de position.

2. Système de caméra selon la revendication 1, dans lequel la caméra (103) peut être fixée au dispositif de maintien (101) au moyen d'un aimant commutable (106).

3. Système de caméra selon la revendication 2, dans lequel le dispositif de maintien (101) présente un électroaimant magnétique hors tension.

4. Système de caméra selon l'une quelconque des revendications 1 à 3, dans lequel le dispositif de maintien (101) présente une mémoire (107) dans laquelle on peut stocker une information représentative de la position du dispositif de maintien (101).

5. Système de caméra selon la revendication 4, dans lequel l'information comprend la position sous forme d'identifiant représentatif.

6. Système de caméra selon la revendication 4 ou 5, dans lequel l'information comprend la position en rapport direct avec un système de coordonnées de véhicule.

7. Système de caméra selon l'une quelconque des revendications 1 à 6, dans lequel la première et la deuxième interface de communication (102, 105) font respectivement partie d'un système de communication RFID.

8. Système de caméra selon l'une quelconque des revendications 1 à 7, dans lequel le dispositif de maintien (101) présente un dispositif d'émission d'énergie (108) qui peut être couplé électriquement à un réseau électrique du véhicule, et dans lequel la caméra (103) présente un dispositif de réception d'énergie (109) qui est relié électriquement à l'accumulateur (104), dans lequel l'énergie électrique peut être transmise sans fil du dispositif d'émission d'énergie (108) au dispositif de réception d'énergie (109) pour charger l'accumulateur (104) par induction.

9. Système de caméra selon l'une quelconque des revendications 1 à 8, dans lequel le dispositif de maintien (101) présente une paroi latérale (110) qui entoure la caméra (103) latéralement à l'état fixé, dans lequel la paroi latérale (110) présente une hauteur (111) telle qu'une face supérieure (136) de la paroi latérale (110) se termine en affleurement avec une face supérieure (112) de la caméra.

10. Système de caméra selon l'une quelconque des revendications 1 à 9, dans lequel le dispositif de maintien (101) présente un mécanisme de ressort (113) pour exercer une force de compression sur la caméra (103).

11. Système de caméra selon l'une quelconque des revendications 1 à 10, dans lequel le dispositif de maintien (101) présente un amplificateur de signal (115) pour augmenter la portée d'un signal vidéo radio de la caméra (103).

12. Système d'assistance pour un véhicule, présentant :
- un système de caméra (100) selon l'une quelconque des revendications 1 à 11,
- au moins une autre caméra,
- un moniteur (131), dans lequel les images de la caméra (103) et de l'autre caméra peuvent être représentées de manière combinée sur le moniteur (131).

13. Système d'assistance pour un véhicule selon la revendication 12 qui fait partie d'un système de remplacement de miroir.

14. Procédé permettant de faire fonctionner un système de caméra (100) selon l'une quelconque des revendications 1 à 11, comprenant les étapes consistant à :
- enregistrer une image au moyen de la caméra (103),
- envoyer l'image au moyen d'une liaison radio à une unité de réception (132) d'un système d'assistance (140) du véhicule,
- envoyer les données de position avec l'image au moyen de la caméra (103) à l'unité de réception (132) du système d'assistance (140),
- représenter l'image en fonction des données de position.
